# EUROPÄISCHE PATENTSCHRIFT

(11) **EP 1 412 692 B1**
(45) Veröffentlichungstag und Bekanntmachung des Hinweises auf die Patenterteilung: **17.08.2005**
(21) Anmeldenummer: 02745212.7
(22) Anmeldetag: 04.04.2002
(51) Int. Cl.: F41G 3/00

(54) **ZIELFERNROHR**
AIMING TELESCOPE
LUNETTE DE VISEE

(30) Priorität: 05.04.2001 DE 10116997
(43) Veröffentlichungstag der Anmeldung: 28.04.2004
(60) Teilanmeldung: 05012825.5
(73) Patentinhaber: Hensoldt AG, 35576 Wetzlar (DE)
(72) Erfinder: WAGNER, Thomas, 35435 Wettenberg (DE)
(74) Vertreter: Gnatzig, Klaus
(86) Internationale Anmeldenummer: PCT/EP2002/003723
(87) Internationale Veröffentlichungsnummer: WO 2002/082003

(56) Entgegenhaltungen:
- DE-U- 29 720 737
- US-A- 6 005 711

## Beschreibung

Zielfernrohre weisen üblicher Weise ein relativ zu einem Außenrohr transversal zur Fernrohrachse verstellbares Innenrohr und eine in Richtung der Fernrohrachse verstellbare Linse oder Linsengruppe auf. Die transversale Verstellung des Innenrohres dient dabei zur Verstellung einer Zielmarke, zur sogenannten Elevationseinstellung und die longitudinale Verstellung der Linse oder Linsengruppe zum sogenannten Parallaxenausgleich, d.h. zur Einstellung des Fernrohres auf unterschiedliche Zielentfernungen.

Die Einstellvorrichtungen für die Elevationseinstellung sind üblicher Weise etwa in der Fernrohrmitte an sogenannten Einstelltiumen angeordnet; dabei sind in der Regel zwei im Winkel zueinander angeordnete solche Einsteltürme vorhanden, jeweils einer für die Höheneinstellung und einer für die Seiteneinstellung der Zielmarke.

Aus ergonomischen Gründen ist es empfehlenswert, auch die Bedieneinrichtung für den Parallaxenausgleich in der Nähe, idealer Weise in der selben Ebene, der Bedienelemente für die Elevationseinstellung anzuordnen. Derartige Zielfernrohre sind beispielsweise aus der DE 297 20 73 7 oder der US 6 005 711 bekannt. Zur Erzeugung einer auf das Innenrohr entgegen der Elevationseinstellung wirkenden Rückstellkraft ist bei den in der US 6 005 711 beschriebenen Fernrohren eine sich im wesentlichen in Richtung der Fernrohrachse erstreckende Blattfeder im Bereich der Einstelltürme vorgesehen.

Es hat sich nun herausgestellt, daß sich bei derartigen Zielfernrohren aus Gründen der erforderlichen Schußstabilität und der daraus resultierenden erforderlichen Wandstärken des Innen- und Außenrohres die für ein hinreichend großes Sehfeld erforderlichen freien Öffnungsdurchmesser nicht einhalten lassen, wenn gleichzeitig ein Außendurchmesser des Außenrohres von 1 Zoll (25,4mm) oder weniger beibehalten werden soll, insbesondere wenn das Fernrohr auch noch unterschiedliche Vergrößerungen ermöglichen soll und gleichzeitig die Zielmarke einen quadratischen Einstellbereich haben soll.

Ziel der vorliegenden Erfindung ist es deshalb, bei einem Zielfernrohr mit Bedienelementen sowohl für den Parllaxenausgleich als auch für die Elevationseinstellung im wesentlichen in einer Ebene einen Außendurchmesser des Außenrohres mit maximal 25,4 mm zu ermöglichen. Dabei soll auch ein mindestens nahezu quadratischer Einstellbereich für die Elevationseinstellung möglich sein.

Dieses Ziel wird durch Zielfernrohre mit den Merkmalen des Anspruchs 1 gelöst. Vorteilhafte Ausgestaltungen der Erfindung ergeben sich aus den Merkmalen der abhängigen Ansprüche.

Gemäß einer Ausführungsform der Erfindung sind zwischen dem Außenrohr und dem Innenrohr eine oder mehrere Federn vorgesehen, die zur Erzeugung einer Rückstellkraft auf das Innenrohr für die Elevationseinstellung dienen, und als eine oder mehrere Blattfeder(n) ausgebildet sind, die sich im wesentlichen in radialer Richtung erstrecken. Dadurch bleibt - in Richtung der Fernrohrachse gesehen - seitlich der Blattfeder(n) hinreichend Raum für eine dem Parallaxenausgleich dienende Mechanik.

Gemäß einer zweiten Ausführungsform der Erfindung weist das Außenrohr des Zielfernrohres im Bereich der Einstellelemente einen in Richtung der Fernrohrachse kurzen Bereich mit einem vergrößerten Innendurchmesser auf. Um dennoch eine hinreichende mechanische Stabilität zu gewährleisten ist in diesem Bereich, also in unmittelbarer Umgebung der Bedienelemente auch der Außendurchmesser des Außenrohres größer als in den übrigen Bereichen, insbesondere in jeweils einem Bereich vor und hinter der Ebene der Bedienelemente, die zur Aufnahme des Zielfernrohres an einem Gewehr dienen.

Die Vergrößerung des Innendurchmessers beschränkt sich dabei nicht auf Ausnehmungen für den Durchgriff von Bedienelementen für die Elevationseinstellung sondern der Abstand des Außenrohres von der Mittelachse des Außenrohres ist in dem Bereich mit vergrößertem Innendurchmesser in allen Richtungen größer als in den Bereichen vor und hinter der Ebene der Bedienelemente, die zur Aufnahme des Zielfernrohres am Gewehr dienen.

Durch den vergrößerten Innendurchmesser des Außenrohres ist es möglich, bei für ein großes Sehfeld erforderlichem Innen- und Außendurchmesser des Innenrohres die Mechanik, die für die Einstellung des Parallaxenausgleichs und für die Elevationseinstellung erforderlich ist, zwischen dem Innenrohr und dem Außenrohr anzuordnen.

Im Extremfall kann der Innendurchmesser des äußeren Rohres größer oder gleich dem Außendurchmesser des äußeren Rohres sein.

Die Feder oder Federn, die zur Erzeugung einer Rückstellkraft auf das Innenrohr für die Elevationseinstellung dienen, sind vorzugsweise als eine oder mehrere Blattfeder(n) ausgebildet, die sich im wesentlichen in radialer Richtung erstrecken, und sind in dem Bereich zwischen dem Außenrohr und dem Innenrohr angeordnet, in dem der Innendurchmesser des Außenrohres vergrößert ist. Dadurch bleibt - in Richtung der Fernrohrachse gesehen - seitlich der Blattfeder(n) hinreichend Raum für die dem Parallaxenausgleich dienende Mechanik. In der Extremstellung der Elevationseinstellung, bei vollständig durchgespannter Feder taucht diese vollständig in den Erweiterungsbereich des Außenrohres ein; so daß die Feder den Einstellbereich der Elevationseinstellung nicht beschränkt.

Die Blattfeder(n) sollten an mindestens drei in radialer Richtung versetzten Stellen am Außenrohr und an mindestens zwei in radialer Richtung versetzten Stellen am Innenrohr abgestützt sein. Die Abstützstellen am Innenrohr sind dabei vorzugsweise jeweils gegenüber den Bedienelementen der Elevationseinstellung angeordnet und um annähernd 90° zueinander um die Fernrohrachse versetzt. Die Abstützstelle der Blattfeder(n) am Innenrohr liegen dabei in etwa mittig - in Längsrichtung der Blattfeder(n) betrachtet - zwischen zwei Abstützstellen am Außenrohr. Dadurch läßt sich erreichen, daß die Richtungen der von der/den Feder(n) erzeugten Rückstellkräfte im wesentlichen antiparallel zu den Kraftrichtungen der von den Bedienelementen der Elevationseinstellung auf das Innenrohr ausgeübten Kräfte sind.

Um Totstellen der Blevationseinstellung zu vermeiden, also Stellungen des Innenrohres, in denen die Rückstellkraft der Blattfeder(n) nicht ausreichen, sind die Blattfeder(n) vorzugsweise an einer dritten Stelle am Innenrohr abgestützt, die etwa mittig zwischen den beiden anderen Abstützstellen am Innenrohr liegt Auch diese dritte Abstützstelle der Blattfeder(n) am Innenrohr liegt dabei in etwa mittig - in Längsrichtung der Blattfeder(n) betrachtet - zwischen zwei Abstützstellen am Außenrohr. Dadurch wird erreichen, daß die Richtung der von der/den Feder(n) erzeugten und durch diese dritte Abstützstelle am Innenrohr auf das Innenrohr übertragenen Rückstellkraft im wesentlichen antiparallel zu dem Summenvektor der von beiden Bedienelementen der Elevationseinsteilung auf das Innenrohr ausgeübten Kräfte ist.

Die Krümmung der Blattfeder(n) ist an den verschiedenen Stellen so gewählt, daß die erforderlichen Richtungen der von der/den Blattfeder(n) auf das Innenrohr ausgeübten Kräfte erreicht werden.

Die Blattfeder, oder jede der Blattfedern kann einstückig geschlitzt ausgebildet sein, so daß diese drei, vorzugsweise vier freie Enden aufweist. Es ist jedoch auch möglich, mehrere Blattfedersegmente zu einer entsprechenden Blattfeder zusammen zu fügen. Ebenso können zwei oder drei einzelne dünnen Blattfedern zu einem Blattfederpaket zusammen gesetzt sein.

Die Blattfedern weisen besonders bevorzugt folgende Ausbildung auf:
- ein erstes Federsegment mit einem zentralen Teil und zwei sich daran an beiden Seiten anschließenden äußeren Teilen, wobei die äußeren Teile betragsmäßig und richtungsmäßig gleich gekrümmt aber richtungsmäßig entgegengesetzt zum zentralen Teil gekrümmt sind,
- ein sich vom zentralen Teil zu einer Seite erstreckendes zweites Segment, das entsprechend dem Innendurchmesser des Außenrohres gekrümmt ist,
- und ein vom äußeren Rand des zweiten Segmentes in Richtung auf das zentrale Teil des ersten Segmentes verlaufendes drittes Segment, das in der Nähe der Anschlußstelle zum zweiten Segment richtungsmäßig wie das zweite Segment jedoch betragsmäßig stärker als das zweite Segment gekrümmt ist und daran anschließend in entgegengesetzter Richtung gekrümmt ist.

Eine derart geformte Blattfeder kann derart zwischen dem Innenrohr und dem Außenrohr angeordnet sein, daß das gesamte zweite Segment am Außenrohr anliegt und außerdem die beiden Enden der äußeren Teile des ersten Segmentes und das Ende des Dritten Segmentes am Außenrohr abgestützt sind. Die mittleren Bereiche der äußeren Teile des ersten Segmentes und der mittlere Bereich des dritten Segmentes sind dann am Innenrohr abgestützt.

Nachfolgend werden Einzelheiten der Erfindung anhand des in den Figuren dargestellten Ausführungsbeispiels näher erläutert. Dabei zeigen:
- Figur 1:: einen Schnitt durch ein erfindungsgemäßes Zielfernrohr in einer die Fernrohrachse enthaltenden Ebene,
- Figur 2:: eine Schnitt durch das Zielfernrohr in Figur 1 in einer zur Figur 1 senkrechten Ebene, und
- Figur 3:: eine perspektivische Ansicht einer Blattfeder für die Erzeugung der Rückstellkraft für die Elevationseinstellung.

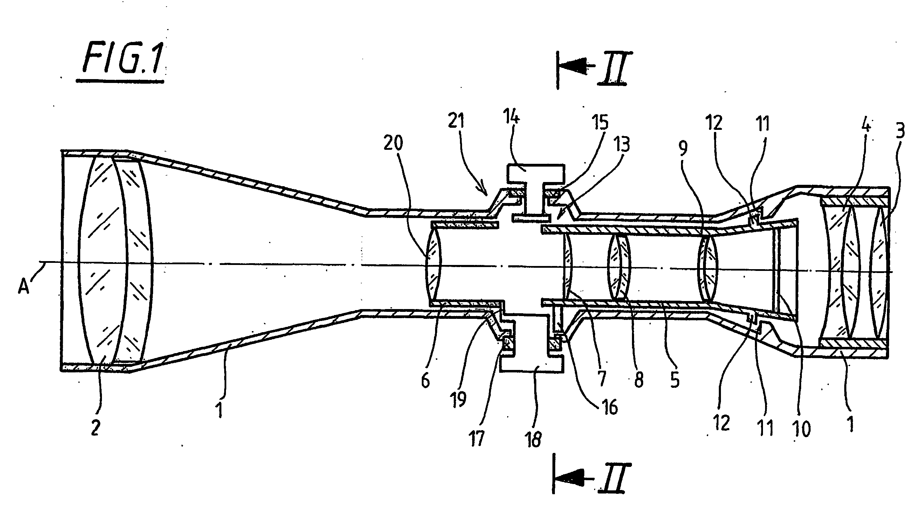

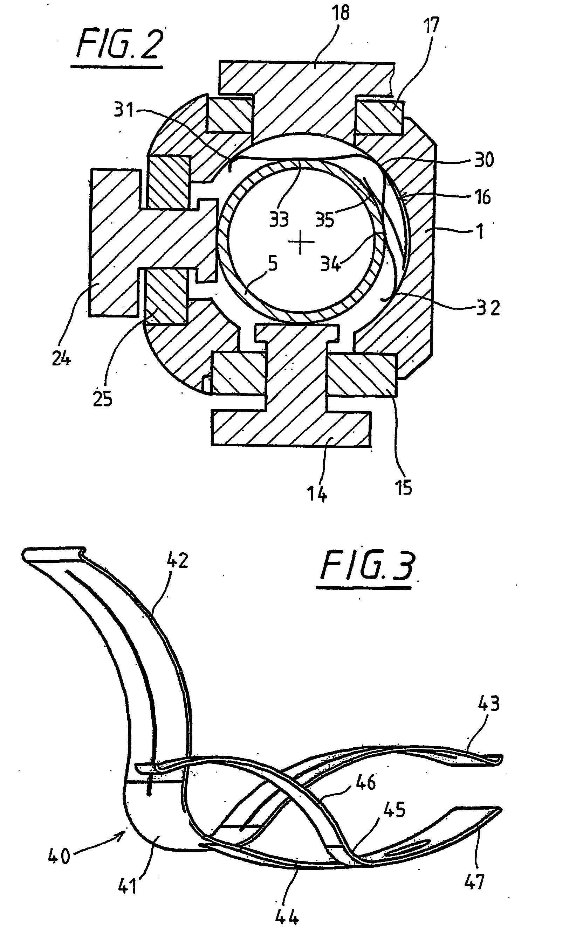

Das Zielfernrohr in den Figuren 1 und 2 hat ein Außenrohr (1), dessen Innen- und Außendurchmesser jeweils zu den beiden Enden zunimmt. Am objektivseiteigen Ende des Zielfernrohres ist das Objektiv (2) und am okularseitigen Ende das zweilinsige Okular (3, 4) angeordnet. Die beiden Komponenten (3, 4) des Okulars sind durch Drehen des Okularteils in Richtung der Ferbrohrachse (A) verschiebbar, wodurch ein Dioptrienausgleich möglich ist.

Innerhalb des Außenrohres (1) ist ein zweistückiges Innenrohr (5,6) angeordnet. Das objektivseitige Innenrohr (5) ist koaxial zur Fernrohrachse (A) verschiebbar im Außenrohr (1) aufgenommen und hält eine Fokussierlinse (20). Durch Verschieben der Fokussierlinse (20) koaxial zur optischen Achse erfolgt der Parallaxenausgleich, d.h. die Scharfstellung auf unterschiedliche Zielentfernungen.

Zum Verschieben des objektivseitigen Innenrohres (6) ist im Außenrohr (1) in einer Lagerscheibe (17) ein Bedienkaopf (18) mit einem Exzenter (19) angeordnet. Durch Drehen des Bedienknopfes (18) bewegt sich der Exzenter (19) parallel zur Fernrohrachse (A) und nimmt entsprechend das objektivseitige Innenrohr mit

Im okularseitigen Innenrohr (5) sind eine Feldlinse (7), ein zweilinsiges Umkehrsystem (8, 9) und eine Strichplatte (10) aufgenommen. Das vom Objektiv (2) gemeinsam mit der Fokussierlinse (20) unmittelbar objektivseitig der Feldlinse (7) erzeugte reelle Zwischenbild wird vom Umkehrsystem (8, 9) reell in die Ebene der Strichplatte (10) abgebildet. Durch einen nicht dargestellten okularseitigen Einstellring sind die beiden Linsen (8, 9) des Umkehrsystems gegeneinander in bekannter Weise entlang der optischen Achse verschiebbar, wodurch sich unterschiedliche Vergrößerungen zwischen 4,5 -facher und 14- facher Vergrößerung einstellen lassen. Das Umkehrsystem (8, 9) bildet demzufolge einen Variator, der eine Vergrößerungsänderung um mindestens einen Faktor drei erlaubt.

Zur Einstellung unterschiedlicher Elevationen ist die Strichplatte (10) senkrecht zur Fernrohrachse (A) verschiebbar. Dazu ist das okularseitige Innenrohr (5) kippbar bzw. schwenkbar im Außenrohr (1) aufgenommen. Das Außenrohr weist dazu in der Nähe der Strichplatte (10), jedoch in Richtung der Fernrohrachse (A) beabstandet von der Strichplatte (10) Vorsprünge (11) und das Innenrohr dazu korrespondierende Vorsprünge (12) auf, so daß eine Kippung des die Strichplatte tragenenden okularseitigen Innenrohres (5) um die Anschlagflächen der Vorsprünge möglich ist.

Zur Elevationseinstellung sind zwei um 90° zueinander angeordnete Bedienelemente (14, 24) am Außenrohr (1) in Höhe des objektivseitigen Endes des okularseitigen Innenrohres (5) vorgesehen. Jedes dieser Bedienelemente (14, 24) besteht im wesentliche aus einer Gewindespindel, die mit einer Mutter (15, 25) am Außenrohr (1) verschraubt ist und deren inneres Ende einen Flansch aufweist, der gegen das okularseitige Innenrohr (5) drückt.

Für eine Rastung der Elevationseinstellung kann an der jeweiligen Mutter noch eine nicht dargestellte Federspitze und an der Gewindespindel jeweils eine um die Gewindespindel herum verlaufende Zahnung vorgesehen sein, mit der die jeweilige Federspitze kämmt. Soweit eine Skala auf den Bedienelementen vorgesehen ist, können die Bedienelemente (14, 24) jeweils auch von der zugehörigen Geweindespindel abkuppelbar sein.

Die Bedienelemente (14, 24) für die Elevationseinstellung und das Bedienelement (18) für den Parallaxenausgleich sind nahezu in einer Ebene in Richtung der Fernrohrachse (A), jeweils um 90° um die Fernrohrachse (A) versetzt angeordnet.

Für die Erzeugung einer Rückstellkraft auf das okularseitige Innenrohr (5) ist zwischen dem Außenrohr (1) und dem okularseitigen Innenrohr (5) eine Blattfeder (16) angeordnet. Damit einerseits ein ausreichender Bewegungsraum für das okularseitige Innenrohr (5) radial zur Fernrohrachse (A) bei gleichzeitig ausreichend großem freien Durchmesser des Innenrohres (5, 6) verbleibt, ist das Außenrohr (1) im Bereich (21) der Bedienelemente (14, 18, 24) verdickt ausgebildet und der Innendurchmesser des Außenrohres in diesem Bereich (13) vergrößert. Der freie Durchmesser des Außenrohres in diesem Bereich (13) mit erweitertem Innendurchmesser beträgt etwa 98% des Außendurchmessers des Außenrohres (1) in den zur Aufnahme des Zielfernrohres dienenden Zwischenbereichen.

Die Blattfeder (16) zur Erzeugung der Rückstellkraft auf das okularseitige Innenrohr gegen die Kraft der beiden Bedienelemente (14, 24) für die Elevationseinstellung erstreckt sich im wesentlichen in radialer Richtung innerhalb des Bereiches (13), in dem der Innendurchmesser des Außenrohres vergrößert ist. Die Blattfeder erstreckt sich dabei um mehr als 90° um die Fernrohrachse (A) herum und stützt sich am Außenrohr an mindestens drei radial versetzten Stellen (30, 31, 32) und an drei radial versetzten Stellen (33, 34, 35) am okularseitigen Innenrohr (5) ab. Jeweils eine der Abstützstellen (33, 34) am okularseitigen Innenrohr (5) steht dabei jeweils einem Bedienelement (14, 24) der Elevationseinstellung gegenüber und der dritte Abstützpunkt (35) liegt in der Winkelhalbierenden der die beiden anderen Abstützpunkte (33, 34) am Innenrohr mit der Fernrohrachse (A) verbindenden Achsen.

Der genaue Aufbau der Blattfeder (16) ist in der Figur 3 dargestellt Die Blattfeder (16) weist ein erstes Federsegment (40) mit einem zentralen Teil (41) und zwei sich daran an beiden Seiten anschließenden äußeren Teilen (42, 43) auf, wobei die äußeren Teile betragsmäßig und richtungsmäßig gleich gekrümmt aber betragsmäßig schwächer und richtungsmäßig entgegengesetzt zum zentralen Teil gekrümmt sind. Weiterhin weist die Blattfeder (16) ein sich vom zentralen Teil (41) zu einer Seite erstreckendes zweites Segment (44), das entsprechend dem Innendurchmesser des Außenrohres gekrümmt ist, und ein sich vom äußeren Rand (47) des zweiten Segmentes (44) in Richtung auf das zentrale Teil (41) des ersten Segmentes (40) verlaufendes drittes Segment (45, 46) auf, das in einem Bereich (45) in der Nähe der Anschlußstelle zum zweiten Segment (44) richtungsmäßig wie das zweite Segment jedoch betragsmäßig stärker als das zweite Segment (44) gekrümmt ist und daran anschließend in entgegengesetzter Richtung gekrümmt ist.

Bei dem Zielfernrohr in den Figuren 1 und 2 beträgt der Innendurchmesser des Außenrohres (1) im Bereich (13) mit erweitertem Innendurchmesser 25 mm und der Außendurchmesser des Innenrohres (5) in diesem Bereich 20 mm. Bei einem Wandstärke von ca. 1,8 mm des Innenrohres (5) verbleibt damit auch bei einem minimalen Außendurchmesser des Außenrohres (1) von 25,4 mm an den für die Adaption am Gewehr vorgesehenen Stellen ein freier Durchmesser des Innenrohres (5), der hinreichend groß ist, so daß bei einem Objektivdurchmesser von 40 mm und bei 3-facher Vergrößerung ein Sehfelder in üblicher Größe von 10, 36 m auf 100 m und bei 9-facher Vergrößerung ein Sehfeld von 3,35 m auf 100 m erreicht wird. Bei diesen Abmessungen beträgt der Krümmungsradius der äußeren Teile (42, 43) des ersten Segmentes (40) der Blattfeder 10 mm und der Krümmungsradius am Ende des dritten Segmentes der Blattfeder, also in dem sich am Innenrohr (5) abstützenden Bereich, 7 mm.

## Patentansprüche

1. Zielfernrohr mit einem relativ zu einem Außenrohr (1) transversal zur Fernrohrachse (A) beweglichen Innenrohr (5) und im Winkel zueinander angeordneten Bedienelementen (14, 24) zur transversalen Verstellung des Innenrohres (5), **dadurch gekennzeichnet, dass** zwischen dem Außenrohr und dem Innenrohr (5) eine oder mehrere Blattfedern (16) zur Erzeugung einer Rückstellkraft auf das Innenrohr (5) angeordnet ist/sind und wobei sich sie Blattfeder(n) im wesentlichen in radialer Richtung erstreckt/erstrecken.

2. Zielfernrohr nach Anspruch 1, wobei das Außenrohr im Bereich (13) der Bedienelemente (14, 24) einen vergrößerten Innendurchmesser aufweist.

3. Zielfernrohr nach Anspruch 1 oder 2, wobei eine in Richtung der Fernrohrachse (A) verschiebbare Optik vorgesehen ist, wobei die Einstellvorrichtung (18) zur Verschiebung der Optik in oder in der Nähe der Ebene der Bedienelemente (14, 24) für die transversale Verstellung des Innenrohres (5) angeordnet ist.

4. Zielfernrohr nach einem der Ansprüche 1 bis 3, wobei der Innendurchmesser Außenrohres (1) im Bereich (13) mit erweitertem Innendurchmesser mindestens 95 % des minimalen Außendurchmessers des Außenrohres (1) beträgt.

5. Zielfernrohr nach einem der Ansprüche 1 bis 4, wobei die Blattfeder(n) an mindesten drei umfangsmäßig versetzten Stellen (30, 31, 32) am Außenrohr (1) abgestützt ist/sind.

6. Zielfernrohr nach Anspruch 5, wobei die Blattfeder(n) (16) an mindestens zwei, vorzugsweise drei umfangsmäßig versetzten Stellen (33, 34, 35) am Innenrohr abgestützt ist/sind.

7. Zielfernrohr nach Anspruch 6, wobei zwei der Abstützstellen (33, 34) der Blattfeder(n) (16) am Innenrohr jeweils einem der Bedienelemente (14, 24) zur transversalen Verstellung des Innenrohres (5) gegenüberliegend angeordnet sind.

8. Zielfernrohr nach Anspruch 7, wobei die dritte Abstützstelle (35) der Blattfeder(n) (16) am Innenrohr (5) auf der Winkelhalbierenden des von den beiden anderen Abstützstellen (33, 34) der Blattfeder(n) (16) am Innenrohr und der Fernrohrachse (A) aufgespannten Winkels liegt.

9. Zielfernrohr nach einem der Ansprüche 1 bis 8, wobei die Blattfeder(n) drei oder vier freie Enden aufweist/aufweisen.

10. Zielfernrohr nach einem der Ansprüche 1 bis 9, wobei die Blattfedern (16) folgenden Aufbau aufweisen:
- ein erstes Federsegment (40) mit einem zentralen Teil (41) und zwei sich daran an beiden Seiten anschließenden äußeren Teilen (42, 43), wobei die äußeren Teile betragsmäßig und richtungsmäßig gleich gekrümmt aber richtungsmäßig entgegengesetzt zum zentralen Teil (41) gekrümmt sind,
- ein sich vom zentralen Teil (41) zu einer Seite erstreckendes zweites Segment (44), das entsprechend dem Innendurchmesser des Außenrohres (1) gekrümmt ist,
- und ein vom äußeren Rand (47) des zweiten Segmentes (44) in Richtung auf das zentrale Teil (41) des ersten Segmentes (40) verlaufendes drittes Segment (45, 46), das in der Nähe der Anschlußstelle zum zweiten Segment (44) richtungsmäßig wie das zweite Segment (44) jedoch betragsmäßig stärker als das zweite Segment (44) gekrümmt ist und daran anschließend in entgegengesetzter Richtung gekrümmt ist.

## Claims

1. Telescopic sight having an inner tube (5), which is movable relative to an outer tube (1) transversely with respect to the telescope axis (A), and operating elements (14, 24) arranged at an angle relative to one another and serving for transversely adjusting the inner tube (5), **characterized in that** one or more leaf springs (16) is/are arranged between the outer tube and the inner tube (5) for the purpose of generating a restoring force on the inner tube (5), and the leaf spring(s) essentially extending in the radial direction.

2. Telescopic sight according to Claim 1, the outer tube having an enlarged internal diameter in the region (13) of the operating elements (14, 24).

3. Telescopic sight according to Claim 1 or 2, an optic displaceable in the direction of the telescope axis (A) being provided, the setting device (18) for displacing the optic being arranged in or in the vicinity of the plane of the operating elements (14, 24) for the transverse adjustment of the inner tube (5).

4. Telescopic sight according to one of Claims 1 to 3, the internal diameter of the outer tube (1) in the region (13) with an extended internal diameter amounting to at least 95% of the minimum external diameter of the outer tube (1).

5. Telescopic sight according to one of Claims 1 to 4, the leaf spring(s) being supported on at least three circumferentially offset locations (30, 31, 32) on the outer tube (1).

6. Telescopic sight according to Claim 5, the leaf spring(s) (16) being supported on at least two, preferably three, circumferentially offset locations (33, 34, 35) on the inner tube.

7. Telescopic sight according to Claim 6, two of the supporting locations (33, 34) of the leaf spring(s) (16) on the inner tube in each case being arranged opposite one of the operating elements (14, 24) for transversely adjusting the inner tube (5).

8. Telescopic sight according to Claim 7, the third supporting location (35) of the leaf spring(s) (16) on the inner tube (5) lying on the angle bisector of the angle spanned by the other two supporting locations (33, 34) of the leaf spring(s) (16) on the inner tube and the telescope axis (A).

9. Telescopic sight according to one of Claims 1 to 8, the leaf spring(s) having three or four free ends.

10. Telescopic sight according to one of Claims 1 to 9, the leaf spring(s) (16) having the following construction:
- a first spring segment (40) with a central part (41) and two outer parts (42, 43) adjoining the latter on both sides, the outer parts being curved identically in terms of magnitude and in terms of direction but being curved oppositely in terms of direction with respect to the central part (41),
- a second segment (44) extending to one side from the central part (41), the said second segment being curved in accordance with the internal diameter of the outer tube (1),
- and a third segment (45, 46) running from the outer edge (47) of the second segment (44) in the direction of the central part (41) of the first segment (40), which said segment, in the vicinity of the connecting location with respect to the second segment (44), is curved like the second segment (44) in terms of direction but with a greater magnitude than the second segment (44) and, adjoining that, is curved in the opposite direction.

## Revendications

1. Lunette de visée comprenant un tube intérieur (5) mobile par rapport à un tube extérieur (1) dans le sens transversal par rapport à l'axe de la lunette (A) et des éléments de commande (14, 24) disposés selon un certain angle l'un par rapport à l'autre pour le positionnement transversal du tube intérieur (5), **caractérisée en ce qu'**un ou plusieurs ressorts à lames (16) est/sont disposés entre le tube extérieur et le tube intérieur (5) pour produire une force de rappel sur le tube intérieur (5) et le ou les ressorts à lames s'étendant essentiellement dans le sens radial.

2. Lunette de visée selon la revendication 1, le tube extérieur présentant un diamètre intérieur accru dans la zone (13) des éléments de commande (14, 24).

3. Lunette de visée selon la revendication 1 ou 2, une optique pouvant coulisser dans le sens de l'axe de la lunette (A) étant prévue, le dispositif de réglage (18) pour faire coulisser l'optique étant disposé dans ou à proximité du plan des éléments de commande (14, 24) pour le positionnement transversal du tube intérieur (5).

4. Lunette de visée selon l'une des revendications 1 à 3, le diamètre intérieur du tube extérieur (1) dans la zone (13) ayant un diamètre élargi étant au moins égal à 95 % du diamètre extérieur minimum du tube extérieur (1).

5. Lunette de visée selon l'une des revendications 1 à 4, le ou les ressorts à lames étant soutenu(s) en au moins trois endroits décalés sur le pourtour (30, 31, 32) sur le tube extérieur (1).

6. Lunette de visée selon la revendication 5, le ou les ressorts à lames (16) étant soutenu(s) en au moins deux, de préférence trois endroits décalés sur le pourtour (33, 34, 35) sur le tube intérieur.

7. Lunette de visée selon la revendication 6, deux des points d'appui (33, 34) du ou des ressorts à lames (16) sur le tube intérieur étant à chaque fois disposés à l'opposé de l'un des éléments de commande (14, 24) pour le positionnement transversal du tube intérieur (5).

8. Lunette de visée selon la revendication 7, le troisième point d'appui (35) du ou des ressorts à lames (16) sur le tube intérieur (5) se trouvant sur la bissectrice de l'angle formé par les deux autres points d'appui (33, 34) du ou des ressorts à lames (16) sur le tube intérieur et l'axe de la lunette (A).

9. Lunette de visée selon l'une des revendications 1 à 8, le ou les ressorts à lames présentant trois ou quatre extrémités libres.

10. Lunette de visée selon l'une des revendications 1 à 9, les ressorts à lames (16) présentant la structure suivante :
- un premier segment de ressort (40) comprenant une partie centrale (41) et deux parties extérieures (42, 43) qui viennent se raccorder à celle-ci sur les deux côtés, les parties extérieures présentant une courbure identique du point de vue de l'amplitude et de la direction, mais une courbure dont la direction est à l'opposée de la partie centrale (41),
- un deuxième segment (44) qui s'étend de la partie centrale (41) vers un côté et dont la courbure correspond au diamètre intérieur du tube extérieur (1),
- et un troisième segment (45, 46) qui s'étend du bord extérieur (47) du deuxième segment (44) en direction de la partie centrale (41) du premier segment (40), lequel présente à proximité du point de raccordement avec le deuxième segment (44) une courbure dont la direction est identique à celle du deuxième segment (44) mais dont l'amplitude est supérieure à celle du deuxième segment (44) et, raccordée à celle-ci, une courbure dans le sens inverse.
